# EUROPÄISCHE PATENTANMELDUNG

(11) **EP 2 711 583 A2**
(43) Veröffentlichungstag der Anmeldung: **26.03.2014**
(21) Anmeldenummer: 13184807.9
(22) Anmeldetag: 17.09.2013
(51) Int. Cl.: F16F 9/02

(54) **Längenverstellbare Druckfeder**

(30) Priorität: 24.09.2012 DE 102012217174
(71) Anmelder: SUSPA GmbH, 90518 Altdorf (DE)
(72) Erfinder: Wunderling, Gerhard, 91257 Pegnitz (DE); Richter, Stefan, 91344 Waischenfeld (DE)
(74) Vertreter: Rau, Schneck & Hübner Patentanwälte Rechtsanwälte PartGmbB

(57) **Zusammenfassung**

Eine längenverstellbare Druckfeder umfasst ein mit einem fließfähigen Druck-Medium gefülltes Gehäuse (2) mit einer Mittel-Längs-Achse (8), eine das Gehäuse (2) an einem ersten Ende (6) abschließende Führungs- und Dichtungseinheit (7), eine abgedichtete durch die Führungs- und Dichtungseinheit (7) aus dem ersten Ende (6) des Gehäuses (2) herausgeführte, ein äußeres Ende (10) aufweisende Kolbenstange (9), einen mit der Kolbenstange (9) verbundenen, im Gehäuse (2) abgedichtet geführten Kolben (12; 12a), einen einseitig vom Kolben (12; 12a) begrenzten und mit Druck-Medium gefüllten ersten Teil-Gehäuseraum (15), einen mit dem ersten Teil-Gehäuseraum (15) verbindbaren mit Druck-Medium gefüllten zweiten Teil-Gehäuseraum (16), ein betätigbares Ventil (17; 17a; 17b) zum Verbinden der Teil-Gehäuseräume (15, 16) durch eine Betätigungs-Überströmverbindung (19, 24, 28, 38), ein mit der Betätigungs-Überströmverbindung (19, 24, 28, 38) zusammenarbeitendes erstes Verschlusselement (36) und ein mit der Betätigungs-Überströmverbindung (19, 24, 28, 38) zusammenarbeitendes Sicherheits-Verschlusselement (34; 34a; 34b), wobei das Ventil (17; 17a; 17b) einen Ventilstift (21; 21b) aufweist, der von außerhalb des Gehäuses (2) in eine Auslösestellung, in der der Ventilstift (21; 21b) eine Freigabe der Betätigungs-Überströmverbindung (19, 24, 28, 38) ermöglicht, und in eine Schließstellung, in der er die Betätigungs-Überströmverbindung (19, 24, 28, 38) verschließt, bringbar ist, wobei das erstes Verschlusselement (36) in Auslösestellung des Ventilstifts (21) die Betätigungs-Überströmverbindung (19, 24, 28, 38) freigibt und in Schließstellung des Ventilstiftes (21) die Betätigungs-Überströmverbindung (19, 24, 28, 38) verschließt, und wobei das Sicherheits-Verschlusselement (34; 34a; 34b) in Abhängigkeit einer auf die Kolbenstange (21) wirkenden äußeren Gegen-Kraft (F_{G}) in eine Sicherheits-Blockierstellung bringbar ist, in der es in Auslösestellung des Ventilstiftes (21) die Betätigungs-Überströmverbindung (19, 24, 28, 38) verschließt.

## Beschreibung

Die Erfindung betrifft eine längenverstellbare Druckfeder.

Aus der DE 102 52 711 A1 ist eine längenverstellbare Druckfeder bekannt. Eine derartige Druckfeder ist blockierbar und dient insbesondere zur Verwendung in einem Kraftfahrzeugsitz. Eine derartige Druckfeder kann beispielsweise auch in einem höhenverstellbaren Möbel, insbesondere bei einem Einsäulen-Tisch, eingebaut sein. Ein derartiger Einsäulen-Tisch wird beispielsweise in der Gastronomie oder als Konferenztisch sowie im Bereich der Medizintechnik eingesetzt. Derartige Tische können auch als höhenverstellbare Büro- oder Schulmöbel dienen, die ein Arbeiten wahlweise im Sitzen und im Stehen ermöglichen. Es ist nachteilig, dass bei einer Auslösung der blockierbaren Druckfeder unter Vorlast, beispielsweise dadurch, dass Personen auf einer höhenverstellbaren Tischplatte sitzen, zu einer Beschädigung des Möbels führen können und ein Verletzungsrisiko darstellen.

Der Erfindung liegt die Aufgabe zugrunde, eine längenverstellbare Druckfeder zu schaffen, die eine Auslösung unter Vorlast verhindert.

Die Aufgabe wird durch eine längenverstellbare Druckfeder mit den im Anspruch 1 angegebenen Merkmalen gelöst. Der Kern der Erfindung besteht darin, dass ein betätigbares Ventil zum Verbinden von zwei Gehäuseräumen durch eine Betätigungs-Überströmverbindung neben einem ersten Verschlusselement ein Sicherheits-Verschlusselement aufweist. Das erste Verschlusselement dient insbesondere zum Verschließen der Betätigungs-Überströmverbindung in einem nicht ausgelösten Zustand der Druckfeder. Das Sicherheits-Verschlusselement dient zum Verschließen der Betätigungs-Überströmverbindung in einem ausgelösten, unter Vorlast befindlichen Zustand der Druckfeder. Weiterhin weist das Ventil einen Ventilstift auf, der von außerhalb des Gehäuses in eine Auslösestellung, in der der Ventilstift eine Freigabe der Betätigungs-Überströmverbindung ermöglicht, und in eine Schließstellung, in der er die Betätigungs-Überströmverbindung verschließt, bringbar ist. Das erste Verschlusselement, das insbesondere als O-Ring ausgeführt sein kann, gibt in Auslösestellung des Ventilsstifts die Betätigungs-Überströmverbindung frei und verschließt in Schließstellung des Ventilstifts die Betätigungs-Überströmverbindung. Das Sicherheits-Verschlusselement, das insbesondere als O-Ring ausgeführt sein kann, ist in Abhängigkeit einer äußeren Gegen-Kraft in eine Sicherheits-Blockierstellung bringbar. In die Sicherheits-Blockierstellung bringbar bedeutet, dass es möglich ist, dass das Sicherheits-Verschlusselement in der Sicherheits-Blockierstellung anordenbar ist. Insbesondere erfolgt eine relative, axiale Verlagerung des Sicherheits-Verschlusselements gegenüber dem Ventilstift. Das bedeutet, dass das Sicherheits-Verschlusselement in die Sicherheits-Blockierstellung bringbar ist, ohne dass hierzu eine Relativverlagerung des Sicherheits-Verschlusselements gegenüber dem Gehäuse und/oder gegenüber einem Dicht-Teller erfolgen muss. In der Sicherheits-Blockierstellung verschließt das Sicherheits-Verschlusselement in der Auslösestellung des Ventilstifts die Betätigungs-Überströmverbindung. Das Ventil der längenverstellbaren Druckfeder ist ein Sicherheitsventil. In Abhängigkeit der Gegen-Kraft, die beispielsweise durch eine auf dem Möbel sitzende Person verursacht sein kann, ist also verhindert, dass auch bei Betätigung des Ventils, also wenn der Ventilstift in Auslösestellung verlagert wird, die Betätigungs-Überströmverbindung verschlossen ist bzw. bleibt. Dadurch ist verhindert, dass die kraftbelastete, längenverstellbare Druckfeder bei mutwilliger oder unbeabsichtigter Betätigung eingeschoben wird. Das Sicherheitsventil ist unkompliziert aufgebaut und erfordert insbesondere nicht einen separaten Entriegelungsmechanismus. Das Sicherheitsventil wirkt passiv. Darüber hinaus ermöglicht die längenverstellbare Druckfeder die Verwendung einer üblichen Dämpfung der Betätigungs-Überströmverbindung. Insbesondere ist es nicht erforderlich, eine starke Dämpfung zu verwenden, um eine überhöhte Einschubgeschwindigkeit der kraftbelasteten Druckfeder und daraus resultierende Gefährdungen zu verhindern. Die Betätigung der längenverstellbaren Druckfeder ist vereinfacht und komfortabel.

Eine Druckfeder nach Anspruch 2 ermöglicht ein Blockieren, also eine Verlagerung des Sicherheits-Verschlusselements in die Sicherheits-Blockierstellung, wenn die Gegen-Kraft größer ist als eine Funktions-Kraft, die insbesondere eine Ausschub-Kraft der Druckfeder ist. Die Ausschub-Kraft der Druckfeder ist insbesondere durch einen Innendruck eines fließfähigen Druck-Mediums in dem Gehäuse der Druckfeder vorgegeben.

Eine Druckfeder nach Anspruch 3 ermöglicht eine vorteilhafte Anbringung des Sicherheits-Verschlusselements an dem Ventilstift. Dadurch, dass das Sicherheits-Verschlusselement mit einer Halte-Kraft am Ventilstift axial entlang der Mittel-Längs-Achse gehalten ist, ist gewährleistet, dass bei einer Auslösung des Ventils ohne Gegen-Kraft das Sicherheits-Verschlusselement gemeinsam mit dem Ventilstift axial verlagert wird. Gleichzeitig kann die Halte-Kraft, die insbesondere eine Reib-Kraft ist, derart eingestellt sein, dass bei Vorliegen der äußeren Gegen-Kraft eine innere Reaktions-Kraft auf das Sicherheits-Verschlusselement so wirkt, dass die Halte-Kraft überschritten und der Ventilstift relativ zu dem Sicherheits-Verschlusselement verlagert wird. Dadurch ist gewährleistet, dass das Sicherheits-Verschlusselement trotz Betätigung des Ventilstiftes in einem Dicht-Sitz angeordnet bleibt.

Eine Druckfeder nach Anspruch 4 ermöglicht eine vorteilhafte Anbringung des Sicherheits-Verschlusselements mit der Halte-Kraft an dem Ventilstift. Das Sicherheits-Verschlusselement ist mit radialer Vorspannung durch Kraftschluss und/oder durch Formschluss an dem Ventilstift angeordnet. Dies ist insbesondere dadurch möglich, dass das Sicherheits-Verschlusselement als O-Ring mit einem Innendurchmesser ausgeführt ist, der kleiner ist als ein Außendurchmesser des Ventilstifts. Dadurch, dass das Sicherheits-Verschlusselement elastische Materialeigenschaften aufweist und insbesondere aus einem Dichtungsmaterial wie Gummi hergestellt ist, führt die Montage des Sicherheits-Verschlusselements an dem Ventilstift zu der radialen Vorspannung.

Eine Druckfeder nach Anspruch 5 ermöglicht eine weitere vorteilhafte Anbringung des Sicherheits-Verschlusselements mit der Halte-Kraft an dem Ventilstift. Das Sicherheits-Verschlusselement ist formschlüssig, insbesondere in einer umlaufenden Ringnut des Ventilstifts, gehalten.

Eine Druckfeder nach Anspruch 6 ermöglicht eine axiale Sicherung des Sicherheits-Verschlusselements an dem Ventilstift.

Eine Druckfeder nach Anspruch 7 ermöglicht eine definierte Anordnung des Sicherheits-Verschlusselements in der Sicherheits-Blockierstellung. Dadurch, dass ein Dicht-Sitz vorgesehen ist, kann das Sicherheits-Verschlusselement die Betätigungs-Überströmverbindung in der Sicherheits-Blockierstellung sicher abdichten. Die Zuverlässigkeit des Sicherheitsventils ist verbessert.

Eine Druckfeder gemäß Anspruch 8 ermöglicht eine unkomplizierte Integration des Dicht-Sitzes. Insbesondere ist es denkbar, dass ein Dicht-Teller, an dem der Dicht-Sitz vorgesehen ist, in eine beispielsweise aus dem Stand der Technik bekannte Druckfeder nachrüstbar ist.

Eine Druckfeder nach Anspruch 9 ermöglicht eine Integration des Dicht-Sitzes an dem Kolben. Der erforderliche Bauraum des Ventils ist reduziert. Die Teileanzahl ist reduziert. Ein derartiger Kolben ist kompakt aufgebaut. Der Kolben ermöglicht eine Funktionsintegration, nämlich die Trennung der Teil-Gehäuseräume einerseits und das Vorsehen des Sicherheitsventils andererseits.

Eine Druckfeder nach Anspruch 10 ermöglicht eine Einstellung einer Funktions-Kraft. Durch die Verwendung mindestens eines Feder-Elements ist es möglich, der Ventilstift-Teller mit einer Feder-Element-Kraft zu beaufschlagen. Insbesondere wirkt die Feder-Element-Kraft in der gleichen Richtung wie die Gegen-Kraft. Durch die Verwendung des mindestens einen Feder-Elements ist die Funktions-Kraft, die zum Aktivieren des Sicherheits-Verschlusselements erforderlich ist, erhöht. Insbesondere ist die Funktions-Kraft einstellbar, insbesondere durch die Anzahl und die Auswahl des mindestens einen Feder-Elements. Dadurch ist es möglich, einen unteren Schwellwert einer Kraftbelastung der Druckfeder, also eine Mindest-Gegen-Kraft, derart einzustellen, dass ein unbeabsichtigtes Ansprechen des Sicherheitsventils im Rahmen einer zulässigen Belastung ausgeschlossen werden kann. Insbesondere ist das mindestens eine Feder-Element eine Schraubenfeder. Es ist auch möglich, anstelle einer oder mehrerer Schraubenfedern eine Tellerfeder und/oder eine Gummifeder als Feder-Element zu verwenden.

Eine Druckfeder nach Anspruch 11 ist kompakt ausgeführt. Dadurch, dass das Sicherheits-Verschlusselement selbst als Feder-Element dient, ist die erforderliche Teilezahl reduziert. Die Montage ist vereinfacht. Die Stückkosten sind reduziert.

Eine Druckfeder nach Anspruch 12 ermöglicht eine verbesserte Abdichtung der Betätigungs-Übertströmverbindung in der Sicherheits-Blockierstellung.

Eine Druckfeder nach Anspruch 13 ermöglicht eine sichere Anordnung des ersten Verschlusselements in der Druckfeder. Das erste Verschlusselement ist axial entlang der Mittel-Längs-Achse im Kolben gehalten. Insbesondere ist das erste Verschlusselement fest im Kolben angeordnet. Gegenüber dem Kolben ist das erste Verschlusselement insbesondere nicht relativ verlagerbar. Die Zuverlässigkeit des Abdichtens der Betätigungs-Überströmverbindung durch das erste Verschlusselement ist erhöht.

Eine Druckfeder nach Anspruch 14 ermöglicht eine besonders effektive und vorteilhafte Aktivierung des Sicherheitsventils.

Eine Druckfeder nach Anspruch 15 ermöglicht eine vorteilhafte Auslösung des Sicherheitsventils.

Zusätzliche Merkmale und Einzelheiten der Erfindung ergeben sich aus der nachfolgenden Beschreibung von zwei Ausführungsbeispielen anhand der Zeichnung. Es zeigen:
- Fig. 1: einen Längsschnitt einer längenverstellbaren Druckfeder gemäß einem ersten Ausführungsbeispiel in einer Schließstellung eines Ventilstifts,
- Fig. 2: eine Ausschnittsvergrößerung eines Ventils in Fig. 1,
- Fig. 3: eine Fig. 1 entsprechende Darstellung mit dem Ventilstift in Auslösestellung,
- Fig. 4: eine Fig. 1 entsprechende Darstellung mit dem Ventilstift in Auslösestellung und einem Sicherheits-Verschlusselement in Sicherheits-Blockierstellung,
- Fig. 5: eine Fig. 1 entsprechende Darstellung einer Druckfeder gemäß einem zweiten Ausführungsbeispiel,
- Fig. 6: eine Ausschnittsvergrößerung eines Ventils gemäß Fig. 5,
- Fig. 7: eine Fig. 5 entsprechende Darstellung mit einem Ventilstift in Auslösestellung,
- Fig. 8: eine Fig. 5 entsprechende Darstellung mit dem Ventilstift in Schließstellung bei einer äußeren Gegen-Kraft auf die Kolbenstange,
- Fig. 9: eine Ausschnittsvergrößerung des Ventils in Fig. 8,
- Fig. 10: eine Fig. 8 entsprechende Darstellung des Ventilstifts in Auslösestellung und des Sicherheits-Verschlusselements in Sicherheits-Blockierstellung,
- Fig. 11: eine Fig. 2 entsprechende Ausschnittsvergrößerung eines Ventils gemäß einem dritten Ausführungsbeispiel in einer Schließstellung des Ventilstifts,
- Fig. 12: eine Fig. 3 entsprechende Darstellung des Ventils in Fig. 11 und
- Fig. 13: eine Fig. 4 entsprechende Darstellung des Ventils in Fig. 11.

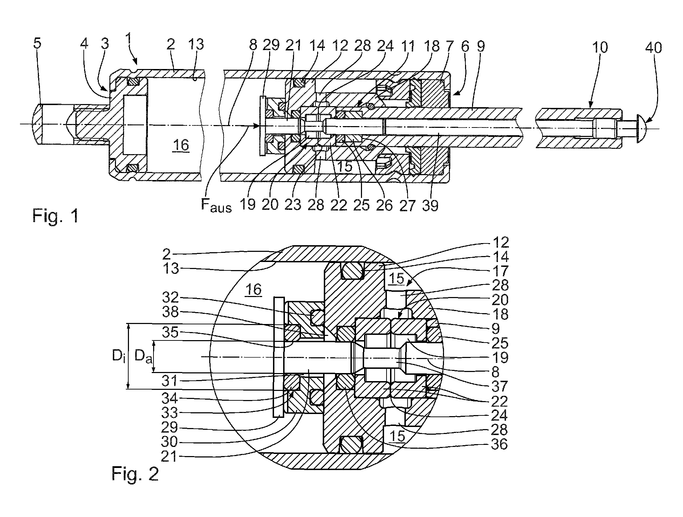

Nachfolgend wird anhand der Fig. 1 bis 4 eine längenverstellbare, blockierbare Druckfeder 1 gemäß einem ersten Ausführungsbeispiel näher erläutert. Die blockierbare Druckfeder 1 weist in im Wesentlichen zylindrisches, aus einem Rohr hergestelltes Gehäuse 2 auf, das an einem in Fig. 1 links dargestellten Ende 3 mittels eines Bodens 4 gasdicht verschlossen ist. An dem Boden 4 ist ein Befestigungselement 5 angebracht. An dem dem Ende 3 gegenüberliegend angeordneten, in Fig. 1 rechts dargestellten Ende 6 des Gehäuses 2 ist eine ringförmig ausgebildete Führungs- und Dichtungseinheit 7 gasdicht befestigt. Die Führungs- und Dichtungseinheit 7 dient zur Führung und Abdichtung einer im Gehäuse 2 konzentrisch zu dessen Mittel-Längs-Achse 8 verschiebbar angeordneten Kolbenstange 9. Am außerhalb des Gehäuses 2 befindlichen freien Ende 10 der Kolbenstange 9 kann ein weiteres Befestigungselement vorgesehen sein.

An einem inneren, im Gehäuse 2 befindlichen Ende 11 der Kolbenstange 9 ist ein Kolben 12 angebracht, der an einer Innenwand 13 des Gehäuses 2 geführt ist und gegenüber dieser mittels einer Dichtung 14 gasdicht abgedichtet ist. Der Kolben 12 teilt den Innenraum des Gehäuses 2 in ein zwischen dem Kolben 12 und der Führungs- und Dichtungseinheit 7 befindlichen ersten Teil-Gehäuseraum 15 und einen hiervon abgewandten zweiten Teil-Gehäuseraum 16. Der zweite Teil-Gehäuseraum 16 ist durch den Kolben 12 und den Boden 4 begrenzt. In den Teil-Gehäuseräumen 15, 16 befindet sich als Druck-Medium Gas unter Druck.

Im Kolben 12 ist ein betätigbares Blockier-Ventil 17 ausgebildet, durch das die Teil-Gehäuseräume 15, 16 miteinander verbunden bzw. voneinander getrennt werden können. Das Ventil 17 weist einen Ventilführungskörper 18 auf, der sich auf der der Dichtungs- und Führungseinheit 7 zugewandten Seite des Kolbens 12 befindet. In dem hohl ausgebildeten Ventilkörper 18 ist ein einen Überströmraum 19 begrenzender Überströmkörper 20 dicht eingeklebt. Der Überströmkörper 20 ist von einem koaxial zur Mittel-Längs-Achse 8 angeordneten und verschiebbaren Ventilstift 21 durchsetzt. Der Ventilstift 21 ist in Fig. 1 in einer Schließstellung dargestellt. Der Überströmkörper 20 weist zwei, insbesondere identisch ausgeführte Ringhülsen 22 auf, die an ihren Stirnseiten 23 aneinander anliegen. Die Ringhülsen 22 umschließen den Überströmraum 19. Zwischen den gegenüberliegend angeordneten Stirnflächen 23 ist ein umlaufender, senkrecht zur Mittel-Längs-Achse 8 orientierter Querschlitz 24 vorgesehen.

Der Ventilstift 21 ist zwischen dem Überströmkörper 20 und der hohl ausgeführten Kolbenstange 9 mittels einer Dichtung 25 nach außen abgedichtet. Die Dichtung 25 ist mittels eines Halteelements 26 an einer Innenschulter 27 der Kolbenstange 9 axial gehalten. Der Überströmraum 19 ist mittels des Querschlitzes 24 und mittels zweier im Ventilkörper 18 ausgebildeter Überströmkanäle 28 mit dem ersten Teil-Gehäuseraum 15 ständig verbunden. Es ist auch möglich, den Überströmkörper 20 einteilig herzustellen, wobei der umlaufende Querschlitz 24 dann beispielsweise durch eine oder mehrere radial zur Mittel-Längs-Achse 8 gerichtete Überströmöffnungen ersetzt sein kann. In jedem Fall muss eine Überströmverbindung von dem Überströmraum 19 und die Überströmkanäle 28 in den ersten Teil-Gehäuseraum 15 gewährleistet sein. Die Überströmkanäle 28 sind radial zur Mittel-Längs-Achse 8 orientiert und bezüglich der Mittel-Längs-Achse 8 diametral gegenüberliegend angeordnet.

Der Ventilstift 21 weist an einem dem zweiten Teil-Gehäuseraum 16 zugewandten Ende einen Ventilstift-Teller 29 auf. Der Ventilstift-Teller 29 ist fest mit dem Ventilstift 21 verbunden.

Zwischen dem Ventilstift-Teller 29 und dem Kolben 12 ist entlang der Mittel-Längs-Achse 8 ein Dicht-Teller 30 angeordnet. Der Dicht-Teller 30 weist eine zentrale Durchgangs-Bohrung 31 auf, durch die der Ventilstift 21 hindurchgeführt ist. Der Dicht-Teller 30 ist stirnseitig an dem Kolben 12 mit einer Dichtung 32 gasdicht abgedichtet. An einer dem Ventilstift-Teller 29 zugewandten Stirnseite weist der Dicht-Teller 30 einen Dicht-Sitz 33 auf.

An dem Dicht-Sitz 33 ist ein Sicherheits-Verschlusselement 34 vorgesehen, das als O-Ring ausgeführt ist. Das Sicherheits-Verschlusselement 34 ist aus einem elastisch deformierbaren Material wie beispielsweise Gummi hergestellt. Das Sicherheits-Verschlusselement 34 ist an einer inneren, ringförmigen Anlagefläche 35 unter radialer Vorspannung an dem Ventilstift 21 gehalten. Die Vorspannung wird insbesondere dadurch erzeugt, dass ein Innendurchmesser des Sicherheits-Verschlusselements 34 kleiner ist als ein Außendurchmesser Dₐ des Ventilstifts 21 im Bereich des Sicherheits-Verschlusselements 34. Das bedeutet, dass das Sicherheits-Verschlusselement 34 mit einer Halte-Kraft F_{H} an dem Ventilstift 21 in axialer Richtung entlang der Mittel-Längs-Achse 8 gehalten ist. Die Halte-Kraft F_{H} ist insbesondere eine Reib-Kraft. Gleichzeitig ist das Sicherheits-Verschlusselement 34 mit einer radialen Vorspannung in dem Dicht-Sitz 33 umfangsseitig an dem Dicht-Teller 30 gehalten. Dies wird insbesondere dadurch erreicht, dass ein Innendurchmesser Dᵢ des Dicht-Sitzes 33 kleiner ist als ein Außendurchmesser des Sicherheits-Verschlusselements 34 in einer auf dem Ventilstift 21 montierten Anordnung, in der auf das Sicherheits-Verschlusselement 34 keine äußeren Kräfte wirken.

In dem Kolben 12 ist ein erstes Verschlusselement 36 angeordnet. Das erste Verschlusselement 36 ist entlang der Mittel-Längs-Achse 8 fest in dem Kolben 12 angeordnet. Das erste Verschlusselement 36 ist zwischen einer Schulter des Kolbens 12 und dem Überströmkörper 20, insbesondere einer Bodenfläche der Ringhülse 22 gehalten. Das erste Verschlusselement 36 ist als O-Ring ausgebildet und dichtet den Ventilstift 21 gegen den Ventilkörper 18 ab. In der in Fig. 1 und 2 gezeigten Anordnung der Druckfeder 1 befindet sich der Ventilstift 21 in einer Schließstellung.

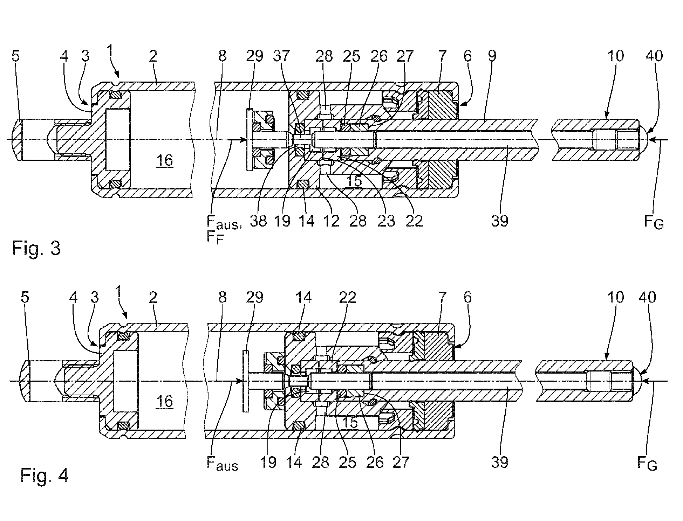

Der Ventilstift 21 weist in einem Bereich zwischen dem Überströmraum 19 und dem Ventilstift-Teller 29 einen verjüngten Abschnitt 37 auf. Der verjüngte Abschnitt weist einen reduzierten Außendurchmesser auf, der kleiner ist als ein Innendurchmesser des ersten Verschlusselements 36. Das bedeutet, dass das erste Verschlusselement 36 den Ventilstift 21 nicht abdichtet, wenn der Ventilstift 21 mit dem verjüngten Abschnitt 37 im Bereich des ersten Verschlusselements 36 angeordnet ist. Eine derartige Anordnung ist in den Fig. 3 und 4 dargestellt und wird im Weiteren noch näher erläutert. In einer derartigen Anordnung der Druckfeder befindet sich der Ventilstift 21 in Auslösestellung.

In der Auslösestellung ist der zweite Teil-Gehäuseraum 16 mit dem ersten Teil-Gehäuseraum 15 über eine Betätigungs-Überströmverbindung verbindbar. Die Betätigungs-Überströmverbindung umfasst eine dem zweiten Teil-Gehäuseraum 16 zugewandte, zentrische Überströmbohrung 38 in dem Kolben 12, den Überströmraum 19, den Querschlitz 24 und die Überströmkanäle 28.

In der hohl ausgebildeten Kolbenstange 9 ist eine entlang der Mittel-Längs-Achse 8 verschiebbare, vom freien Ende 10 her durch Verschieben betätigbare Ventil-Betätigungs-Stange 39 vorgesehen, die gegen den Ventilstift 21 anliegt. Das freie, aus der Kolbenstange 9 herausragende Ende der Ventil-Betätigungs-Stange 39 ist als Betätigungsknopf 40 ausgebildet.

Im Folgenden wird anhand der Fig. 1 bis 4 die Funktionsweise der Druckfeder 1 erläutert. In der Anordnung der Druckfeder 1 in Fig. 1 befindet sich der Ventilstift 21 in der Schließstellung. Das bedeutet, dass die Betätigungs-Überströmverbindung 19, 24, 28, 38, und insbesondere die Überströmbohrung 38, durch das erste Verschlusselement 36 verschlossen ist. Die beiden Teil-Gehäuseräume 15, 16 sind voneinander getrennt. Aufgrund des in dem zweiten Teil-Gehäuseraum 16 unter Druck untergebrachten Druck-Mediums wirkt eine Ausschub-Kraft Fₐᵤₛ entlang der Mittel-Längs-Achse 8. Die Ausschub-Kraft Fₐᵤₛ ist zu dem freien Ende 10 der Kolbenstange 9 gerichtet. In der Anordnung gemäß Fig. 1 wirkt keine Gegen-Kraft auf die Kolbenstange 9, d. h. die Kolbenstange 9 und ein damit verlagerbares Teil wie beispielsweise eine Tischplatte sind unbelastet.

Durch Auslösen der Druckfeder 1, d. h. durch Betätigen des Betätigungsknopfes 40, wird der Ventilstift 21 in die Auslösestellung gebracht. Diese Anordnung ist in Fig. 3 dargestellt. Dazu wird der Betätigungsknopf 40 in die Kolbenstange 9 hinein, in Fig. 3 also nach links, gedrückt. Durch den Betätigungsknopf 40 wird die Ventil-Betätigungs-Stange 39 nach links zu dem Kolben 12 hin verschoben. Die Ventil-Betätigungs-Stange 39 verschiebt den Ventilstift 21 nach links, so dass der verjüngte Abschnitt 37 im Bereich des ersten Verschlusselements 36 angeordnet ist. Das bedeutet, dass der Ventilstift in der Auslösestellung angeordnet ist. Der Ventilstift 21 ist gegenüber dem Ventilkörper 18 nicht abgedichtet. Die BetätigungsÜberströmverbindung 19, 24, 28, 38, insbesondere die Überströmbohrung 38, ist von dem ersten Verschlusselement 36 freigegeben. Die beiden Teil-Gehäuseräume 15, 16 sind durch die Betätigungs-Überströmverbindung 19, 24, 28, 38 miteinander verbunden.

In diesem Fall wirkt keine Gegen-Kraft F_{G} auf die Kolbenstange 9. Durch das Auslösen der Druckfeder 1 wird der Ventilstift 21 gemäß Fig. 3 nach links verlagert. Zusammen mit dem Ventilstift 21 wird der Dicht-Teller 30, der über das Sicherheits-Verschlusselement 34 an dem Ventilstift 21 gehalten ist, verlagert. Dadurch wird die Betätigungs-Überströmverbindung 19, 24, 28, 38 freigegeben. Die Halte-Kraft, mit der der Dicht-Teller 30 an dem Ventilstift 21 gehalten ist, ist größer als eine Reaktionskraft des Druck-Mediums in dem zweiten Teil-Gehäuseraum 16. Die Verbindung des Dicht-Tellers 30 mit dem Ventilstift 21 wird durch die doppelte Vorspannung des Sicherheits-Verschlusselements 34 gewährleistet. Das Sicherheits-Verschlusselement 34 ist an der inneren Anlagefläche 35 an dem Ventilstift 21 und an einer äußeren Anlagefläche in dem Dicht-Sitz 33 des Dicht-Tellers 30 gehalten.

In Fig. 4 ist die Betätigung der Druckfeder 1 unter Gegen-Kraft F_{G} dargestellt. Die Gegen-Kraft F_{G} ist eine äußere Kraft, die auf die Kolbenstange 9 wirkt. Die Gegen-Kraft F_{G} kann beispielsweise dadurch verursacht werden, dass eine Person auf einem Teil eines Möbels wie beispielsweise einer Tischplatte sitzt oder steht. In diesem Fall ist die Gegen-Kraft F_{G} auf die Kolbenstange 9 und damit auf den Kolben 12 größer als eine von dem Druck-Medium verursachte Ausschub-Kraft Fₐᵤₛ. Der Ventilstift 21 und der Ventilstift-Teller 29 werden entlang der Mittel-Längs-Achse 8 gemäß Fig. 4 nach links verlagert. Aufgrund der Gegen-Kraft F_{G} wirkt ein erhöhter Innendruck in dem zweiten Teil-Gehäuseraum 16, der der Verlagerung des an dem Ventilstift 21 mittels des Sicherheits-Verschlusselements 34 gehaltenen Dicht-Tellers 30 entgegenwirkt. Die Ausschub-Kraft Fₐᵤₛ stellt eine Funktions-Kraft F_{F} dar, die kleiner ist als die Gegen-Kraft F_{G}. Die aufgrund des erhöhten Innendrucks in dem zweiten Teil-Gehäuseraum 16 resultierende Reaktions-Kraft ist größer als eine Halte-Kraft F_{H}, mit der das Sicherheits-Verschlusselement 34 in axialer Richtung an der inneren Anlagefläche 35 an dem Ventilstift 21 gehalten ist. Das bedeutet, dass bei einem Auslösen der Druckfeder 1 bei einer äußeren Gegen-Kraft F_{G}, die größer ist als eine Funktions-Kraft F_{F} lediglich der Ventilstift 21 mit dem Ventilstift-Teller 29 axial verlagert wird. Der Dicht-Teller 30 wird aufgrund des erhöhten Innendrucks in dem zweiten Teil-Gehäuseraum 16 gegen den Kolben 12 gedrückt. Aufgrund des erhöhten Innendrucks in dem zweiten Teil-Gehäuseraum 16 wird das Sicherheits-Verschlusselement 34 gegen den Dicht-Sitz 33 gedrückt und dichtet somit den Ventilstift 21 gegenüber der Durchgangs-Bohrung 31 ab. Insbesondere ist die Durchgangs-Bohrung 31 in dem Dicht-Teller 30, die mit der Überströmbohrung 38 des Kolbens 12 verbunden ist, abgedichtet. Die Betätigungs-Überströmverbindung 19, 24, 28, 38 ist durch das Sicherheits-Verschlusselement 34 verschlossen.

Das Sicherheits-Verschlusselement befindet sich in einer Sicherheits-Blockierstellung. Das Ventil ist geschlossen. Trotz Betätigung des Betätigungsknopfes 40, also trotz Auslösung der Druckfeder 1 und Verlagern des Ventilstiftes 21 in die Auslösestellung, bleibt das Ventil 17 geschlossen. Das Ventil 17 ist ein Sicherheitsventil. Ein mutwilliger Missbrauch der längenverstellbaren Druckfeder 1 ist ausgeschlossen.

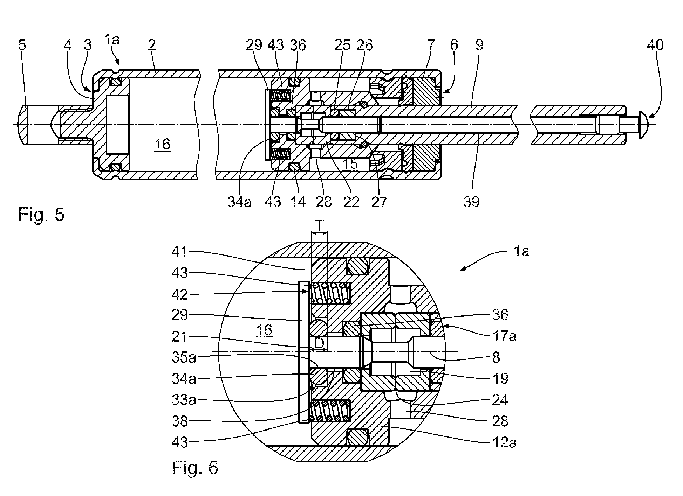

Im Folgenden wird unter Bezugnahme auf die Fig. 5 bis 10 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Ein wesentlicher Unterschied gegenüber dem ersten Ausführungsbeispiel besteht darin, dass der Dicht-Sitz 33a für das Sicherheits-Verschlusselement 34a in dem Kolben 12a integriert ist. Insbesondere ist bei der Druckfeder 1a gemäß dem zweiten Ausführungsbeispiel ein Dicht-Teller nicht vorgesehen. Der Dicht-Sitz 33a ist als stirnseitige, kreisförmige Vertiefung an einer dem Ventilstift-Teller 29 zugewandten Stirnseite 41 des Kolbens 12a vorgesehen. Wie insbesondere aus Fig. 6 hervorgeht, weist der Dicht-Sitz 33a ausgehend von der Stirnseite 41 eine Tiefe T auf, die kleiner ist als ein Durchmesser D einer Kreisfläche des Ringquerschnitts des Sicherheits-Verschlusselements 34a. Ausgehend von der Stirnseite 41 erstrecken sich in einer Richtung parallel zur Mittel-Längs-Achse 8 mehrere, konzentrisch zur Mittel-Längs-Achse 8 angeordnete Sacklochbohrungen 42. In jeder Sacklochbohrung 42 ist ein Feder-Element 43 in Form einer Schraubenfeder angeordnet. In einer entspannten Anordnung ragen die Schraubenfedern 43 jeweils über die Stirnseite 41 an dem Kolben 12a hervor. Die Feder-Elemente 43 dienen zum Beaufschlagen des Ventilstift-Tellers 29 mit einer der Ausschub-Kraft entgegengesetzt wirkenden Feder-Element-Kraft F_{FE}.

Das Sicherheits-Verschlusselement 34 ist mit der inneren Anlagefläche 35a an dem Ventilstift 21 mit radialer Vorspannung gehalten.

Im Folgenden wird anhand der Fig. 5 bis 10 die Funktionsweise der Druckfeder 1a gemäß dem zweiten Ausführungsbeispiel näher erläutert. In der Anordnung gemäß Fig. 5 ist die Druckfeder 1a nicht ausgelöst, d. h. der Ventilstift 21 ist in der Schließstellung angeordnet. Das bedeutet, dass die Betätigungs-Überströmverbindung 19, 24, 28, 38, insbesondere die Überströmbohrung 38, von dem ersten Verschlusselement 36 verschlossen, also abgedichtet ist. Die Überströmbohrung 38 gemäß dem zweiten Ausführungsbeispiel ist, wie in Fig. 6 dargestellt, als Ringraum zwischen dem Sicherheits-Verschlusselement 34a und dem ersten Verschlusselement 36 bezüglich der Mittel-Längs-Achse 8 angeordnet. Die von dem in dem zweiten Teil-Gehäuseraum 16 bevorrateten Druck-Medium ausgeübte Ausschub-Kraft Fₐᵤₛ auf den Ventilstift 21 ist kleiner als die Summe der Feder-Element-Kräfte. Das bedeutet, dass der Ventilstift-Teller 29 in der Anordnung gemäß Fig. 6 nicht an der Stirnseite 41 des Kolbens 12a anliegt.

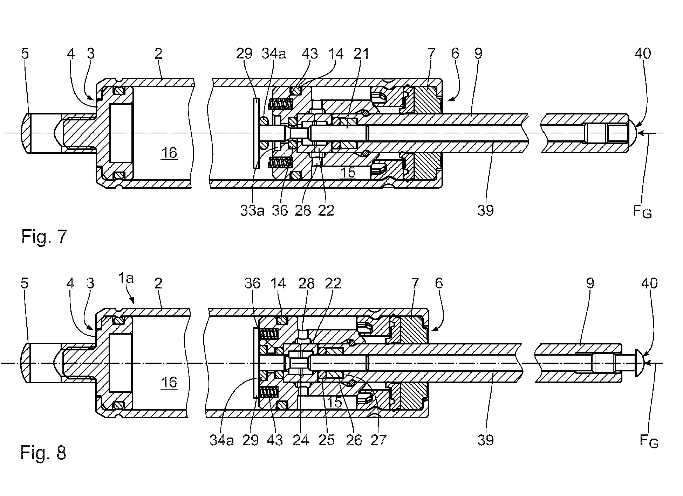

Durch Betätigung der Druckfeder 1a, die in Fig. 7 dargestellt ist, werden der Betätigungsknopf 40, die Ventil-Betätigungs-Stange 39 und damit der Ventilstift 21 nach links verlagert. Der Ventilstift 21 ist mit dem verjüngten Abschnitt 37 im Bereich des ersten Verschlusselements 36 angeordnet. Das erste Verschlusselement 36 befindet sich in der Auslösestellung. Insbesondere die Überströmbohrung 38 ist freigegeben. Die Betätigungs-Überströmverbindung 19, 24, 28, 38 ist durch das erste Verschlusselement 36 in der Auslösestellung freigegeben. Aufgrund der radialen Vorspannung des Sicherheits-Verschlusselements 34a an dem Ventilstift 21 wird dieses zusammen mit dem Ventilstift 21 entlang der Mittel-Längs-Achse 8 nach links verlagert. Das Sicherheits-Verschlusselement 34a ist beabstandet von dem Dicht-Sitz 33a angeordnet.

Im Folgenden wird die Betätigung der Druckfeder 1a gemäß dem zweiten Ausführungsbeispiel unter Gegen-Kraft F_{G} erläutert. Aufgrund der Gegen-Kraft F_{G} auf die Kolbenstange 9 in dem nicht-ausgelösten Zustand gemäß Fig. 8, also wenn der Betätigungsknopf 40 nicht betätigt ist, wirkt ein erhöhter Innendruck in dem zweiten Teil-Gehäuseraum 16 auf den Ventilstift 21. Der erhöhte Innendruck bewirkt insbesondere, dass eine auf den Ventilstift-Teller 29 wirkende innere Reaktionskraft größer ist als die Summe der Feder-Element-Kräfte F_{FE}. Das bedeutet, dass der Ventilstift-Teller 29 gegen die Stirnseite 41 des Kolbens 12a gepresst wird. Dadurch wird das Sicherheits-Verschlusselement 34a komprimiert und in den Dicht-Sitz 33a gedrückt. Dadurch ist die Betätigungs-Überström-Verbindung 19, 24, 28, 38 und insbesondere die Überströmbohrung 38 von dem Sicherheits-Verschlusselement 34a verschlossen. Das bedeutet, dass der erhöhte Innendruck in dem zweiten Teil-Gehäuseraum 16 auf das Sicherheits-Verschlusselement 34a wirkt. Das Sicherheits-Verschlusselement 34a wird dadurch einerseits axial, also entlang der Mittel-Längs-Achse 8, vorgespannt. Gleichzeitig wird das Sicherheits-Verschlusselement 34a radial nach außen in den Dicht-Sitz 33a gepresst. Die Halte-Kraft F_{H}, mit der das Sicherheits-Verschlusselement 34a an dem Ventilstift 21 gehalten ist, ist reduziert und insbesondere aufgehoben.

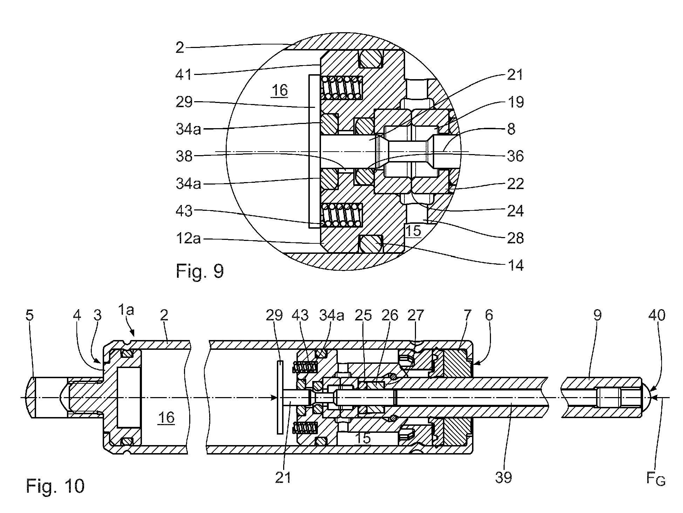

Wird nun die Druckfeder 1a, wie in Fig. 10 dargestellt, bei einer Gegen-Kraft F_{G} ausgelöst, wird der Ventilstift 21 von dem Betätigungsknopf 40 über die Ventil-Betätigungsstange 39 zusammen mit dem Ventilstift-Teller 29 nach links in den zweiten Teil-Gehäuseraum 16 verlagert. Das erste Verschlusselement 36 wird von dem Ventilstift 21 abgestreift. Der Ventilstift 21 ist mit dem verjüngten Abschnitt 37 im Bereich des ersten Verschlusselements 36 angeordnet. Dadurch, dass das Sicherheits-Verschlusselement 34a in den Dicht-Sitz 33a hineingepresst ist und der erhöhte Innendruck in dem zweiten Teil-Gehäuseraum 16 auf das Sicherheits-Verschlusselement 34a wirkt, ist die Reaktionskraft auf das Sicherheits-Verschlusselement 34a größer als die Halte-Kraft an dem Ventilstift 21. Bei der Verlagerung des Ventilstifts 21 verbleibt das Sicherheits-Verschlusselement 34a in dem Dicht-Sitz 33a. Dadurch ist die Betätigungs-Überström-Verbindung 19, 24, 28, 38 und insbesondere die Überströmbohrung 38 durch das Sicherheits-Verschlusselement 34a verschlossen. Der Ventilstift 21 befindet sich in der Auslösestellung. Das Sicherheits-Verschlusselement 34a befindet sich in der Sicherheits-Blockierstellung. Obwohl die Druckfeder 1a ausgelöst ist, bleibt das Ventil 17a durch das Sicherheits-Verschlusselement 34a verschlossen.

Durch die Auswahl der Feder-Elemente 43, insbesondere durch die Anzahl der Feder-Elemente 43, deren Länge entlang der Mittel-Längs-Achse 8, und/oder deren Federkonstante, die insbesondere durch das Material, aus dem die Feder-Elemente 43 hergestellt sind, beeinflusst wird, kann die Feder-Element-Kraft F_{FE} festgelegt werden. Dadurch ist es möglich, die Funktions-Kraft F_{F}, bei der ein Andrücken des Ventilstift-Tellers 29 gegen die Stirnseite 41 des Kolbens 12a und insbesondere ein Einpressen des Sicherheits-Verschlusselements 34a in den Dicht-Sitz 33a erfolgt, einzustellen. Dadurch ist es beispielsweise möglich, dass die Druckfeder 1a bei Vorliegen geringer Gegen-Kräfte dennoch ausgelöst und betätigt werden kann. Es ist insbesondere denkbar, die Feder-Elemente 43 derart zu dimensionieren, dass das Sicherheits-Verschlusselement 34a erst dann in die Sicherheits-Blockierstellung gebracht wird, wenn die äußere Gegen-Kraft F_{G} eine definierbare Mindest-Gegen-Kraft überschreitet. Das bedeutet, dass die Mindest-Gegen-Kraft eingestellt werden kann.

Anstelle der Schraubenfedern ist es möglich, eine Tellerfeder als Feder-Element zu verwenden. Es ist auch denkbar, eine Gummifeder zu verwenden. Insbesondere ist es möglich, dass die Feder-Elemente 43 direkt an dem Ventilstift 21 befestigt werden. Es ist auch denkbar, dass der Ventilstift-Teller 29 gleichzeitig als Feder-Element 43 dient. Dadurch ist die erforderliche Teileanzahl reduziert. Es ist auch denkbar, dass das Sicherheits-Verschlusselement 34a als Feder-Element 43 dient.

Die Funktions-Kraft F_{F}, die zu einer Verlagerung des Sicherheits-Verschlusselements 34a in die Sicherheits-Blockierstellung führt, ist insbesondere abhängig von der Ausschub-Kraft Fₐᵤₛ der Druckfeder 1a, der Halte-Kraft F_{H} des Sicherheits-Verschlusselements 34a an dem Ventilstift 21 und der Feder-Element-Kraft F_{FE}. Erst dann, wenn die Gegen-Kraft F_{G} die Ausschub-Kraft Fₐᵤₛ und die Feder-Element-Kraft F_{FE} überschreitet, ist eine Abdichtung des Ventils 17a durch das Sicherheits-Verschlusselement 34a gewährleistet. Dadurch kann das Ventil 17a auch beim Auslösen der Druckfeder 1a nicht geöffnet werden.

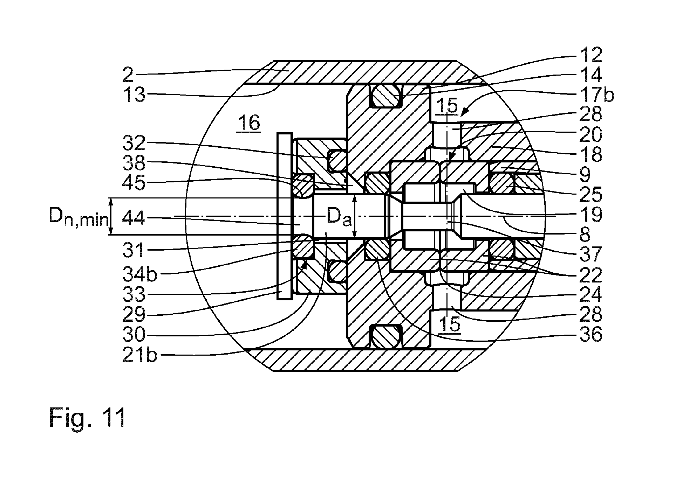

Im Folgenden wird unter Bezugnahme auf die Fig. 11 bis 13 ein drittes Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Die Druckfeder 1b gemäß dem dritten Ausführungsbeispiel entspricht im Wesentlichen der Druckfeder 1 gemäß dem ersten Ausführungsbeispiel. Wesentlicher Unterschied ist die Ausführung des Ventilstifts 21b, der eine umlaufende Ringnut 44 aufweist. Die Nut 44 weist einen gewölbten, insbesondere kreisabschnittsförmig ausgeführten Nutgrund 45 auf. Wesentlich ist, dass der Nutgrund 45 mit einer Außenkontur des Sicherheits-Verschlusselements 34b korrespondiert. Das Sicherheits-Verschlusselement 34b ist als O-Ring mit einem kreisförmigen Querschnitt ausgeführt.

Die Nut 44 ist an dem Ventilstift 21b benachbart zu dem Ventilstift-Teller 29 ausgeführt.

Durch den Nutgrund 45 wird ein minimaler Nut-Außendurchmesser D_{n, min} festgelegt. Der minimale Nut-Außendurchmesser Dₙ, ₘᵢₙ ist im Wesentlichen identisch zu dem Außendurchmesser Dₐ des Ventilstifts 21b in einem zylindrischen Abschnitt außerhalb der Nut 44. Es ist auch denkbar, dass der minimale Nut-Außendurchmesser D_{n, min} kleiner ist als der Außendurchmesser Dₐ.

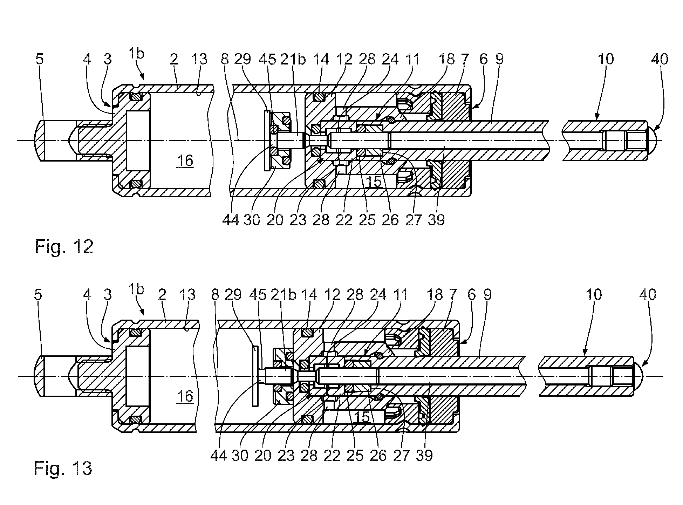

Die Funktionsweise der Druckfeder 1b gemäß dem dritten Ausführungsbeispiel ist im Wesentlichen identisch zu der Funktionsweise der Druckfeder 1 gemäß dem ersten Ausführungsbeispiel, worauf hiermit verwiesen wird. Dadurch, dass die umlaufende Nut 44 im Ventilstift 21b vorgesehen ist, ist das Sicherheits-Verschlusselement 34b formschlüssig an dem Ventilstift 21b gehalten. Zusätzlich kann das Sicherheits-Verschlusselement 34b auch kraftschlüssig, insbesondere durch eine radiale Vorspannung, an dem Ventilstift 21b gehalten sein. Insgesamt ist die Mitnahme des Sicherheits-Verschlusselements 34b bei der nichtbelasteten Druckfeder 1b gemäß Fig. 12 verbessert.

## Patentansprüche

1. Längenverstellbare Druckfeder umfassend
a. ein mit einem fließfähigen Druck-Medium gefülltes Gehäuse (2) mit einer Mittel-Längs-Achse (8),
b. eine das Gehäuse (2) an einem ersten Ende (6) abschließende Führungs- und Dichtungseinheit (7),
c. eine abgedichtete durch die Führungs- und Dichtungseinheit (7) aus dem ersten Ende (6) des Gehäuses (2) herausgeführte, ein äußeres Ende (10) aufweisende Kolbenstange (9),
d. einen mit der Kolbenstange (9) verbundenen, im Gehäuse (2) abgedichtet geführten Kolben (12; 12a),
e. einen einseitig vom Kolben (12; 12a) begrenzten und mit Druck-Medium gefüllten ersten Teil-Gehäuseraum (15),
f. einen mit dem ersten Teil-Gehäuseraum (15) verbindbaren mit Druck-Medium gefüllten zweiten Teil-Gehäuseraum (16),
g. ein betätigbares Ventil (17; 17a; 17b) zum Verbinden der Teil-Gehäuseräume (15, 16) durch eine Betätigungs-Überströmverbindung (19, 24, 28, 38),
h. ein mit der Betätigungs-Überströmverbindung (19, 24, 28, 38) zusammenarbeitendes erstes Verschlusselement (36) und
i. ein mit der Betätigungs-Überströmverbindung (19, 24, 28, 38) zusammenarbeitendes Sicherheits-Verschlusselement (34; 34a;34b),
j. wobei das Ventil (17; 17a; 17b) einen Ventilstift (21; 21b) aufweist, der von außerhalb des Gehäuses (2) in eine Auslösestellung, in der der Ventilstift (21; 21b) eine Freigabe der Betätigungs-Überströmverbindung (19, 24, 28, 38) ermöglicht, und in eine Schließstellung, in der er die Betätigungs-Überströmverbindung (19, 24, 28, 38) verschließt, bringbar ist,
k. wobei das erstes Verschlusselement (36) in Auslösestellung des Ventilstifts (21) die Betätigungs-Überströmverbindung (19, 24, 28, 38) freigibt und in Schließstellung des Ventilstiftes (21) die Betätigungs-Überströmverbindung (19, 24, 28, 38) verschließt, und
l. wobei das Sicherheits-Verschlusselement (34; 34a; 34b) in Abhängigkeit einer auf die Kolbenstange (21) wirkenden äußeren Gegen-Kraft (F_{G}) in eine Sicherheits-Blockierstellung bringbar ist, in der es in Auslösestellung des Ventilstiftes (21) die Betätigungs-Überströmverbindung (19, 24, 28, 38) verschließt.

2. Druckfeder gemäß Anspruch 1, **dadurch gekennzeichnet, dass** das Sicherheits-Verschlusselement (34; 34a; 34b) derart ausgeführt ist, dass es in die Sicherheits-Blockierstellung gebracht wird, wenn die Gegen-Kraft (F_{G}) größer ist als eine Funktions-Kraft (F_{F}), die insbesondere eine Ausschub-Kraft (Fₐᵤₛ) der Druckfeder (1; 1a) ist.

3. Druckfeder gemäß einem der vorstehenden Ansprüche, **dadurch gekennzeichnet, dass** das Sicherheits-Verschlusselement (34; 34a; 34b) mit einer Halte-Kraft (F_{H}) an dem Ventilstift (21; 21b) axial gehalten ist.

4. Druckfeder gemäß Anspruch 3, **dadurch gekennzeichnet, dass** das Sicherheits-Verschlusselement (34; 34a) mit radialer Vorspannung an dem Ventilstift (21) angeordnet ist.

5. Druckfeder gemäß Anspruch 3 oder 4, **dadurch gekennzeichnet, dass** das Sicherheits-Verschlusselement (34b) formschlüssig an dem Ventilstift (21b) gehalten ist.

6. Druckfeder gemäß einem der vorstehenden Ansprüche, **gekennzeichnet durch** einen Ventilstift-Teller (29) als Axialsicherung des Sicherheits-Verschlusselements (34; 34a; 34b).

7. Druckfeder gemäß einem der vorstehenden Ansprüche, **gekennzeichnet durch** einen Dicht-Sitz (33; 33a), an dem das Sicherheits-Verschlusselement (34; 34a; 34b) in der Sicherheits-Blockierstellung abdichtend anliegt.

8. Druckfeder gemäß Anspruch 7, **dadurch gekennzeichnet, dass** der Dicht-Sitz (33) an einem Dicht-Teller (30) angeordnet ist.

9. Druckfeder gemäß Anspruch 7, **dadurch gekennzeichnet, dass** der Dicht-Sitz (33a) an dem Kolben (12a) angeordnet ist.

10. Druckfeder gemäß Anspruch 9, **gekennzeichnet durch** mindestens ein Feder-Element (43) zum Beaufschlagen des Ventilstifts (21) über den Ventilstift-Teller (29) mit einer Feder-Element-Kraft, die insbesondere der Gegen-Kraft gleichgerichtet ist.

11. Druckfeder gemäß Anspruch 10, **dadurch gekennzeichnet, dass** das Sicherheits-Verschlusselement (34a; 34b) und/oder der Ventilstift-Teller (29) als das mindestens eine Feder-Element (43) dient.

12. Druckfeder gemäß einem der Ansprüche 9 bis 11, **dadurch gekennzeichnet, dass** Sicherheits-Verschlusselement (34a; 34b) in der Sicherheits-Blockierstellung radial nach außen bezüglich der Mittel-Längs-Achse (8) abdichtend in den Dicht-Sitz (33a) gepresst ist.

13. Druckfeder gemäß einem der vorstehenden Ansprüche, **dadurch gekennzeichnet, dass** das erste Verschlusselement (36) axial entlang der Mittel-Längs-Achse (8) im Kolben (12; 12a) gehalten ist.

14. Druckfeder gemäß einem der vorstehenden Ansprüche, **dadurch gekennzeichnet, dass** das Sicherheits-Verschlusselement (34; 34a; 34b) axial entlang der Mittel-Längs-Achse (8) im Gehäuse (2), insbesondere relativ zu dem Kolben (12; 12a) und/oder dem Dicht-Teller (30), verlagerbar ist.

15. Druckfeder gemäß Anspruch 14, **dadurch gekennzeichnet, dass** das Sicherheits-Verschlusselement (34; 34a; 34b) derart an dem Ventilstift (21; 21b) gehalten ist, dass es bei einer Verlagerung des Ventilstifts (21) entlang der Mittel-Längs-Achse (8) zu dem Dicht-Sitz (33; 33a) verlagert wird, wenn eine von der Gegen-Kraft (F_{G}) verursachte innere Reaktions-Kraft kleiner ist als eine Halte-Kraft, mit der das Sicherheits-Verschlusselement (34; 34a; 34b) an dem Ventilstift (21; 21b) gehalten ist.
